# EUROPÄISCHE PATENTSCHRIFT

(11) **EP 3 672 765 B1**
(45) Veröffentlichungstag und Bekanntmachung des Hinweises auf die Patenterteilung: **29.09.2021**
(21) Anmeldenummer: 18762236.0
(22) Anmeldetag: 20.08.2018
(51) Int. Cl.: B25J 19/00, F16L 39/04, F16L 27/08

(54) **DREHDURCHFÜHRUNG FÜR EINE HANDHABUNGSEINHEIT**
ROTARY FEEDTHROUGH FOR A HANDLING UNIT
PASSAGE TOURNANT POUR UNITE DE MANUTENTION

(30) Priorität: 22.08.2017 DE 102017119179
(43) Veröffentlichungstag der Anmeldung: 01.07.2020
(73) Patentinhaber: Schunk GmbH & Co. KG Spann- und Greiftechnik, 74348 Lauffen (DE)
(72) Erfinder: FRANZ, Michael, 74360 Ilsfeld (DE)
(74) Vertreter: DREISS Patentanwälte PartG mbB
(86) Internationale Anmeldenummer: PCT/EP2018/072412
(87) Internationale Veröffentlichungsnummer: WO 2019/038221

(56) Entgegenhaltungen:
- EP-A1- 0 054 454
- EP-A1- 0 570 734
- EP-A1- 1 462 704
- EP-A1- 2 138 281
- EP-A2- 0 901 877
- EP-A2- 1 123 784
- DE-A1-102011 000 242
- US-A- 4 683 912

## Beschreibung

Die Erfindung betrifft eine Drehdurchführung zur Anordnung an einer Handhabungseinheit zwischen einem Aktuator und einen Drehantrieb, mit einem Grundteil und einem gegenüber dem Grundteil um eine Drehachse verdrehbaren Drehteil, wobei das Drehteil einen Aktuatorflansch, einen Antriebsflansch und einen zwischen dem Aktuatorflansch und dem Antriebsflansch angeordneten Wellenabschnitt aufweist, mit grundteilseitigen Medienanschlüssen, drehteilseitigen Medienanschlüssen, mit zwischen den Medienanschlüssen vorgesehenen Medienleitungen, und mit zwischen dem Grundteil und dem Drehteil vorgesehenen Drehlagern. Über die Medienanschlüsse können folglich Medien, insbesondere Druckluft, vom Grundteil zum Drehteil übertragen werden. Um eine geeignete Verdrehung des Drehteils gegenüber dem Grundteil vorzusehen, sind zwischen dem Grundteil und dem Drehteil die Drehlager angeordnet.

Derartige Drehdurchführungen sind aus dem vorbekannten Stand der Technik in vielfältiger Art und Weise bekannt. Sie werden insbesondere in der Handhabungstechnik eingesetzt.

Eine Drehdurchführung mit Merkmalen des Oberbegriffs des Patentanspruchs 1 ist aus der DE 10 2011 006 322 A1 bekannt.

Den Drehdurchführungen nachgeschaltet sind insbesondere Aktoren. Diese können beispielsweise als Greifer ausgebildet sein. Um die Aktoren mit insbesondere elektrischer Energie und/oder Medien versorgen zu können, ist es erforderlich, dass durch die Drehdurchführungen Medienleitungen und/oder elektrische Leitungen hindurchgeführt werden. Sind der Drehdurchführung mehrere oder auch unterschiedliche Aktoren nachgeschaltet, so ist für jeden einzelnen Aktor eine entsprechende elektrische Leitung beziehungsweise entsprechende Medienleitungen vorzusehen. Die einzelnen Medienleitungen müssen daher zueinander abgedichtet sein, weshalb vergleichsweise viele Dichtungen erforderlich sind.

Die EP 0 054 454 A1 offenbart eine kompakte Drehdurchführung, die für ein Zwei-Wege-System der Medienführung nur eine dynamische Dichtung erfordert.

Die EP 1 123 784 A2 offenbart ringscheibenförmige Segmente für die Drehdurchführungseinrichtung und die Schleifringanordnung.

Die EP 1 462 704 A1 offenbart eine Drehdurchführung mit einer rotierenden Welle in einer 8-förmigen Hohlwelle. Der Hohlraum bildet zwischen den Wellen zwei Kammern, die weniger als 180° aufweisen, sodass zwei separate Medienführungen realisiert sind.

Die EP 0 901 877 A2 offenbart eine Drehdurchführung, die eine radiale Erweiterung an dem am Anschlussteil umfassenden Wellenabschnitt aufweist, sodass mehr Querkanäle bei gleichbleibender Wellenlänge zur Medienführung untergebracht werden können.

Insgesamt führen die Dichtungen zu einem erhöhten Reibmoment zwischen Grundteil und Drehteil. Da Dichtungen Verschleißteile sind, führt eine hohe Anzahl von Dichtungen ebenfalls zu ungünstigen Verhältnissen und die Fehleranfälligkeit wird erhöht. Hierdurch bauen Drehdurchführungen, welche dazu geeignet sind, dass ihnen mehrere Aktoren nachgeschaltet sind, vergleichsweise groß und weisen ein vergleichsweise großes Reibmoment auf. Zur Durchführung der elektrischen Signale ist bei bekannten Drehdurchführungen für jedes einzelne durchzuführende Signal eine eigene Leitung vorgesehen. Bei der Durchführung von vielen Signalen bedeutet dies viele Leitungen, wobei ein Kontakt zwischen dem Drehteil und dem Grundteil beispielsweise durch einen Schleifring bereitgestellt werden kann. Denkbar ist auch, die Signale über ein Bussystem zu versenden. Dabei können elektrische Signale auch berührungslos per Funk oder auch optisch übersandt werden. Ferner ist denkbar, dass eine elektrische Leistungsübertragung über entsprechende Leitungen zu ermöglichen.

Zudem werden über die Drehdurchführung auf den Aktuator wirkende mechanische Kräfte übertragen und in den Roboterarm, bzw. den zugehörigen Antrieb eingeleitet. Insofern sind die Drehdurchführung in entsprechend stabil und robust auszubilden. Beim bekannten Stand der Technik gemäß der DE 10 2011 006 322 A1 werden insbesondere zwischen dem Aktuatorflansch und dem Antriebsabschnitt wirkende axiale und radiale Kräfte über den Wellenabschnitt übertragen. Der Wellenabschnitt ist insofern entsprechend massiv auszubilden.

Der vorliegenden Erfindung liegt deshalb die Aufgabe zugrunde, eingangs genannte Drehdurchführungen derart weiterzubilden, dass sie vergleichsweise klein bauen und einen vergleichsweise einfachen Aufbau aufweisen.

Diese Aufgabe wird gelöst durch eine Drehdurchführung mit den Merkmalen des Anspruchs 1.

Durch die Erfindung wird also erreicht, dass axiale - also insbesondere Zugkräfte und Druckkräfte - und radiale Kräfte - also insbesondere quer zur Achse des Wellenabschnitts verlaufende Querkräfte - sowie Biegemomente, die auf den Aktuator wirken, nicht - wie beim Stand der Technik - über den Wellenabschnitt vom Aktuatorflansch zum Antriebsflansch übertragen werden, sondern in erster Linie oder auch ausschließlich über das Grundteil übertragen werden. Dies bringt den Vorteil mit sich, dass der Wellenabschnitt als bewegtes Teil einen vergleichsweise dünnen Durchmesser aufweisen kann, da dann über den Wellenabschnitt vorzugsweise lediglich um die Wellenachse herum verlaufende Drehmomente zu übertragen sind.

Ferner ist vorgesehen, dass am Wellenabschnitt anliegende Dichtringe zur Abdichtung benachbarter Medienleitungen vorgesehen sind, und dass der radiale Abstand A der Drehlager zur Drehachse größer ist als der radiale Abstand D der Dichtringe zur Drehachse. Dadurch wird erreicht, dass die Dichtringe im Vergleich zu den Drehlagern einen geringeren Durchmesser aufweisen, wodurch die Dichtringe insgesamt kleiner bauen können. Dadurch ergibt sich eine kleinere Oberfläche der Dichtringe, die mit dem Wellenabschnitt zusammenwirkt. Insgesamt resultiert dadurch ein kleineres Reibmoment zwischen dem Drehteil und dem Grundteil, wodurch zum einen Verschleiß verringert wird und zum anderen ein geringeres Antriebsmoment zum Verdrehen des Drehteils gegenüber dem Grundteil bereitzustellen ist.

Vorzugsweise ist vorgesehen, dass das Aktuatordrehlager einen Innenring, einen Außenring und zwischen dem Innenring und dem Außenring vorgesehene Wälzkörper aufweist, wobei der Innenring mittels eines Sicherungsringes fest am Aktuatorflansch befestigt ist und wobei der Außenring mittels eines Befestigungsringes fest am Grundteil befestigt ist. Entsprechend ist weiter vorzugsweise vorgesehen, dass das Antriebsdrehlager einen Innenring, einen Außenring und zwischen dem Innenring und dem Außenring vorgesehene Wälzkörper aufweist, wobei der Innenring mittels eines Sicherungsringes fest am Antriebsflansch befestigt ist und wobei der Außenring mittels eines Befestigungsringes fest am Grundteil befestigt ist. Anstelle des Vorsehens von Befestigungsringen oder Sicherungsringen ist auch denkbar, die jeweiligen Bauteile mittels Klebstoffen zu befestigen. Hierdurch kann auf einfache Art und Weise ein sicheres Befestigen der Drehlager so erfolgen, dass axiale Kräfte und auch radiale Kräfte über das Drehteil geleitet werden können.

Besonders vorteilhaft ist, wenn der Aktuatorflansch und/oder der Antriebsflansch jeweils eine parallel zur Drehachse verlaufende Mantelfläche aufweisen und wenn die Drehlager an der Mantelfläche des jeweiligen Flansches vorgesehen sind. Die beiden Drehlager weisen den gleichen radialen Abstand A zur Drehachse auf.

Ferner ist vorgesehen, dass für das Verhältnis des radialen Abstands A insbesondere beider Drehlager zur Drehachse zum radialen Abstand D der Dichtringe zur Drehachse gilt: A/D = 4/1 bis 2/1. Ferner hat sich als vorteilhaft herausgestellt, wenn gilt: A/D = 2,5/1 bis 3/1. Bei diesen Verhältnissen kann der Wellenabschnitt einen vergleichsweise geringen Durchmesser aufweisen, so dass Reibverluste aufgrund der Dichtringe minimiert werden.

Gemäß der Erfindung kann ferner vorgesehen sein, dass am Antriebsflansch und/oder am Aktuatorflansch, auf der dem anderen Flansch zugewandten Seite, ein Schleifring zur Durchführung von elektrischen Signalen vorgesehen ist. Der Schleifring erstreckt sich dabei vorzugsweise parallel zur Längsachse hin zum anderen Flansch. Der radiale Abstand S des Schleifrings zur Drehachse ist vorzugsweise größer als der radiale Abstand B der Dichtringe zur Drehachse und kleiner als der radiale Abstand A der Drehlager zur Drehachse. Hierdurch ergeben sich vorteilhafte Verhältnisse. Am Grundteil sind dann Kontaktabnehmer vorgesehen, die mit dem Schleifring zusammenwirken, um die elektrischen Signale vom Grundteil zum Drehteil, und umgekehrt, zu übertragen.

Der Antriebsflansch und/oder der Aktuatorflansch können insbesondere als separate, mit dem Wellenabschnitt verbundene Bauteile ausgebildet sein. Die Verbindung kann insbesondere über einen Formschluss, eine Schraubverbindung oder über eine Passverbindung erfolgen. Denkbar ist auch, dass der Wellenabschnitt und zumindest ein Flansch einstückig ausgebildet sind.

Weitere Einzelheiten und vorteilhafte Ausgestaltungen sind der nachfolgenden Beschreibung zu entnehmen, anhand derer ein Ausführungsbeispiel der Erfindung näher beschrieben und erläutert ist.

Es zeigen:
Figur 1 eine erfindungsgemäße Drehdurchführung in perspektivischer Ansicht;
Figur 2 die Draufsicht auf die Drehdurchführung gemäß Figur 1;
Figur 3 einen Schnitt durch die Drehdurchführung gemäß Figur 2 entlang der Linie III;
Figur 4 einen Schnitt durch die Drehdurchführung gemäß Figur 2 entlang der Linie IV; und
Figur 5 einen Schnitt durch die Drehdurchführung gemäß Figur 2 entlang der Linie V.

In den Figuren ist eine Drehdurchführung 10 gezeigt, die ein Grundteil 12 und ein gegenüber dem Grundteil 12 um eine Drehachse 14 verdrehbares Drehteil 16 aufweist. Das Grundteil 12 dient zur Anordnung an beispielsweise einen Roboterarm. Das Drehteil 16, weist dazu einen Antriebsflansch 22 auf, der an das freie Ende eines Roboterarms angeordnet werden kann. Das Drehteil 16 sieht zudem einen Aktuatorflansch 24 vor, an dem unmittelbar - oder mittelbar durch Zwischenschaltung weiterer Komponenten, wie beispielsweise eines Schnellwechselsystems -ein Aktuator, wie beispielsweise Greifer, angeordnet werden kann.

Zur Drehmomentenabstützung weist das Grundteil 12 zwei sich in radialer Richtung erstreckende Stangen 13 auf, mit denen das Grundteil 12 mit einem nicht drehenden Teil des Roboters verbunden wird.

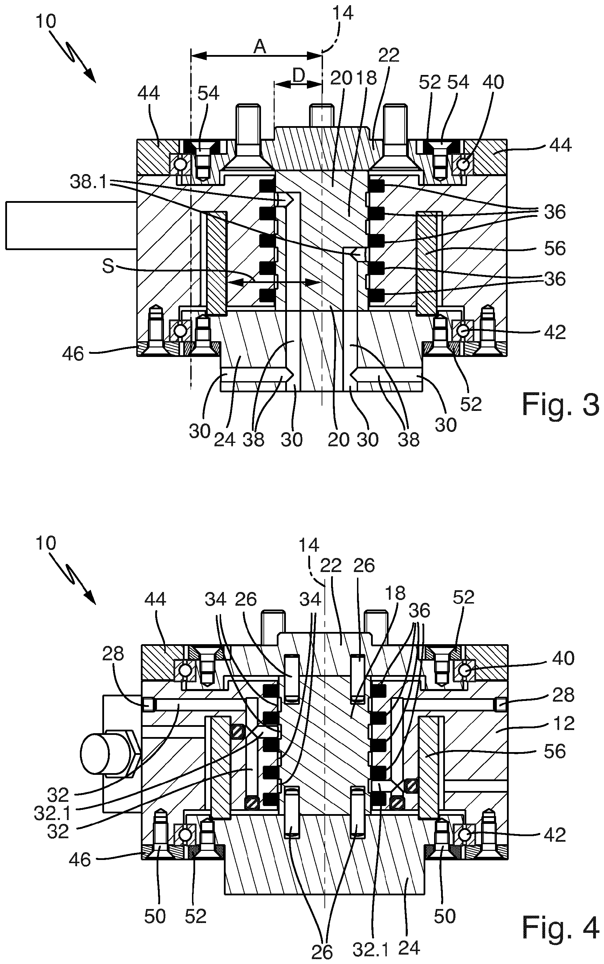

Wie aus den Schnitten gemäß den Figuren 3 und 4 deutlich wird, umfasst das Drehteil 16 einen zwischen dem Antriebsflansch 22 und dem Aktuatorflansch 24 angeordneten Wellenabschnitt 18, an dessen einander gegenüberliegenden Wellenenden 20 der Antriebsflansch 22 und der Aktuatorflansch 24 vorgesehen sind. Wie aus Figur 4 deutlich wird, sind der Antriebsflansch 22 und der Aktuatorflansch 24 über Verbindungsstifte 26 mit dem Wellenabschnitt 18 drehgekoppelt. Der Antriebsflansch 22 und der Aktuatorflansch 24 weisen jeweils einen größeren Durchmesser auf als der Wellenabschnitt 18.

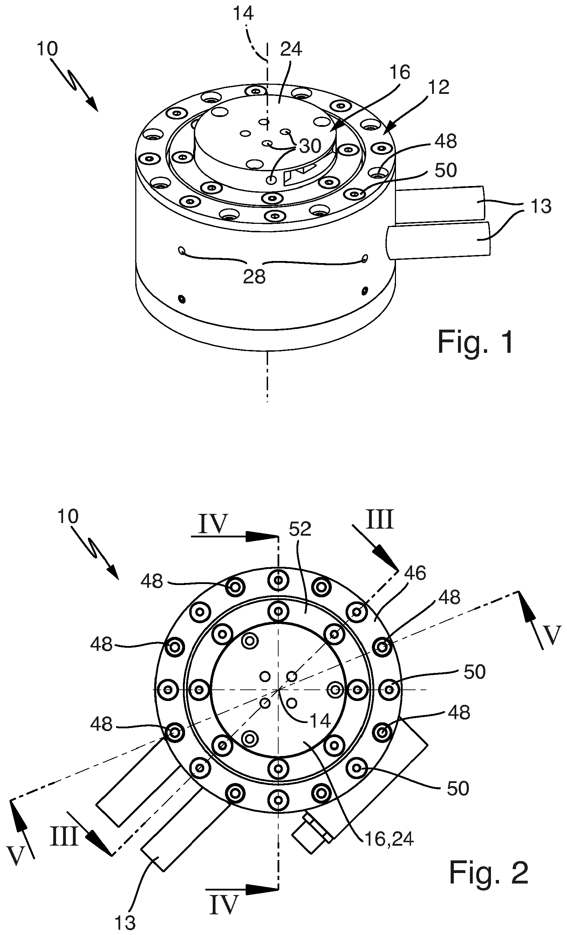

Das Grundteil 12 weist, wie aus Figur 1 und Figur 4 deutlich wird, an seiner radialen Mantelfläche Medienanschlüsse 28 auf, an welchen medienführende Leitungen, insbesondere Druckluftleitungen, angeschlossen werden können. Diese grundteilseitigen Medienanschlüsse 28 sind über Leitungen mit drehteilseitigen, in Figur 1 und Figur 3 zu sehenden Medienanschlüssen 30 verbunden. Diese Medienanschlüsse 30 werden im Betrieb der Drehdurchführung 10 mit den mit Druckluft angetriebenen Aktuatoren verbunden.

Die die Anschlüsse 28 und 30 verbindenden Leitungen sind im Grundteil 12 durch Bohrungen 32 realisiert, die einzelne Bohrungsabschnitte aufweisen (Figur 4), die das Medium hin zur Mantelfläche des Wellenabschnitts 18 führen. Der Wellenabschnitt 18 sieht in den Bereichen, in denen die Bohrungen 32 an den Wellenabschnitt 18 angrenzen, umlaufende Ringnuten 34 vor. Die Bohrabschnitte 32.1 münden dabei in den Ringnuten 34. Zur Dichtung von benachbarten Ringnuten 34 sind am Grundteil 12 um den Wellenabschnitt 18 herum angeordnete Dichtringe 36 vorgesehen. Die Dichtringe 36 sind am Grundteil 12 befestigt und wirken mit geringer Vorspannung nach radial innen gegen den Wellenabschnitt 18, so dass eine Abdichtung zwischen benachbarten Ringnuten 38 gewährleistet ist.

Wie aus Figur 3 deutlich wird, besteht drehteilseitig die Medienleitung aus Bohrungen 38, wobei die Bohrungen 38 Abschnitte 38.1 aufweisen, welche in den Ringnuten 34 münden.

Je mehr Dichtringe 36 vorgesehen sind und je größer die Auflagefläche der Dichtringe 36 an dem Wellenabschnitt 18 ist, desto größer das zu überwindende Reibmoment zwischen dem Drehteil 14 und dem Grundteil 12.

Zur sicheren Drehlagerung des Drehteils 16 am Grundteil 12 ist am Aktuatorflansch 24 ein Aktuatordrehlager 42 und am Antriebsflansch 22 ein Antriebsdrehlager 40 vorgesehen, die als Wälzlager ausgebildet sind. Die Drehlager 40, 42 weisen jeweils einen Innenring auf, der mit der Mantelfläche des jeweiligen Flansches 22, 24 gefügt ist. Die Drehlager 40, 42 weisen zudem jeweils einen Außenring auf, der fest am Grundteil 12 angeordnet ist. Zwischen Außenring und Innenring sind Lagerelemente, insbesondere Kugeln, vorgesehen.

Das Aktuatordrehlager 42 ist am Aktuatorflansch 24 derart angeordnet ist, dass auf den Aktuatorflansch 24 in axialer und radialer Richtung wirkende Kräfte über das Aktuatordrehlager 42 in das Grundteil 12 eingeleitet werden. Das Antriebsdrehlager 40 ist am Antriebsflansch 22 derart angeordnet ist, dass die vom Aktuatorflansch 24 in das Grundteil 12 eingeleiteten Kräfte über das Antriebsdrehlager 40 in Antriebsflansch 22 geleitet werden.

Wie aus Figur 3 deutlich wird, weisen das Aktuatordrehlager 42 und das Antriebsdrehlager 40 den gleichen radialen Abstand A zur Drehachse 14 auf. Der radiale Abstand A beider Drehlager 40, 42 zur Drehachse 14 ist etwa drei Mal so groß wie der Abstand D der Dichtringe 36 zur Drehachse 14. Dadurch können auf das Drehteil 16 wirkende Kippmomente günstig über die Drehlager 40, 42 aufgenommen werden, ohne dass der Wellenabschnitt 18 unvorteilhafter Weise beansprucht wird. Zudem können die Durchmesser der Dichtringe 36 vergleichsweise klein ausfallen, wodurch das aus den Dichtringen 36 resultierende Reibmoment vergleichsweise gering ist.

Wie aus den Schnitten gemäß Figuren 3, 4 und 5 weiter deutlich wird, weist das Grundteil 12 an den einander gegenüberliegenden Seiten Befestigungsringe 44, 46 auf, mit denen die Außenringe der Drehlager 40, 42 in axialer Richtung unter Vorspannung am Grundteil 12 gehalten werden.

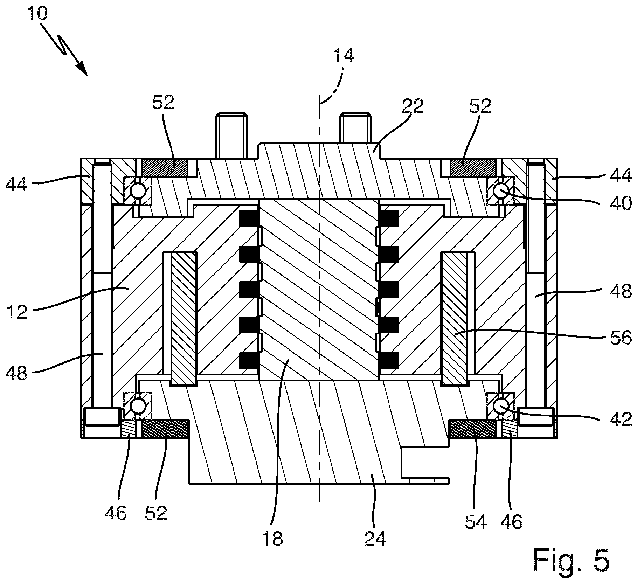

Wie aus Figur 5 deutlich wird, sind im radial äußeren Bereich des Grundteils 12 das Grundteil 12 in axialer Richtung durchgreifende Befestigungsschrauben 48 vorgesehen, mit welchen der Ring 44 und damit das Antriebsdrehlager 40 in axialer Richtung gehalten wird. Aus dem Schnitt gemäß Figur 4 wird deutlich, dass zur Befestigung des Befestigungsrings 46, und damit des Außenrings des Aktuatordrehlagers 42 am Grundteil 12

Schrauben 50 vorgesehen sind. Wie aus der Draufsicht gemäß Figur 2 deutlich wird, liegen die Schrauben 48 und die Schrauben 50 auf der gleichen Kreisbahn um die Drehachse 14.

Zur sicheren Halterung der Innenringe der Drehlager 40, 42 sind an den Flanschen 22, 24 Sicherungsringe 52 vorgesehen, die mittels Schrauben 54 befestigt sind.

Wie aus den Schnitten gemäß Figuren 3, 4 und 5 deutlich wird, ist am Aktuatorflansch 24 zudem ein Schleifring 56 vorgesehen. Der Schleifring weist einen radialen Abstand S zur Drehachse 14 auf. Der Abstand S ist dabei größer als der Abstand D und kleiner als der Abstand A. Mit dem Schleifring 56 können elektrische Signale vom Grundteil 12, das mit dem Schleifring 56 zusammenwirkende Kontakte aufweist, hin zum Drehteil 16 übertragen werden.

Die in den Figuren dargestellte Drehdurchführung 10 hat den Vorteil, dass sie vergleichsweise kompakt baut, axiale und radiale Kräfte günstig überträgt und insbesondere der Reibverlust zwischen dem Drehteil 16 und dem Grundteil 12 vergleichsweise gering ist.

## Patentansprüche

1. Drehdurchführung (10) zur Anordnung an einer Handhabungseinheit zwischen einem Aktuator und einen Drehantrieb,
mit einem Grundteil (12) und einem gegenüber dem Grundteil (12) um eine Drehachse (14) verdrehbaren Drehteil (16),
wobei das Drehteil einen Aktuatorflansch, einen Antriebsflansch und einen zwischen dem Aktuatorflansch und dem Antriebsflansch angeordneten Wellenabschnitt (18) aufweist,
mit grundteilseitigen Medienanschlüssen (28) und drehteilseitigen Medienanschlüssen (30),
mit zwischen den Medienanschlüssen (28, 30) vorgesehenen Medienleitungen (32, 38), und
mit zwischen dem Grundteil (12) und dem Drehteil (16) vorgesehenen Drehlagern (40, 42),
wobei am Aktuatorflansch (24) ein Aktuatordrehlager (42) derart angeordnet ist, dass auf den Aktuatorflansch (24) in axialer und radialer Richtung wirkende Kräfte über das Aktuatordrehlager (42) in das Grundteil (12) eingeleitet werden,
wobei am Antriebsflansch (22) ein Antriebsdrehlager (40) derart angeordnet ist, dass die vom Aktuatorflansch (24) in das Grundteil (12) eingeleiteten Kräfte über das Antriebsdrehlager (40) in Antriebsflansch (22) geleitet werden,
wobei das Aktuatordrehlager (42) und das Antriebsdrehlager (40) den gleichen radialen Abstand A zur Drehachse (14) aufweisen,
wobei am Wellenabschnitt (18) anliegende Dichtringe (36) zur Abdichtung benachbarter Medienleitungen (32, 38) vorgesehen sind,
**dadurch gekennzeichnet, dass** der radiale Abstand A der Drehlager (40, 42) zur Drehachse (14) größer ist als der radiale Abstand D der Dichtringe (36) zur Drehachse (14), und
wobei für das Verhältnis des radialen Abstands A der Drehlager (40, 42) zur Drehachse (14) zum radialen Abstand D der Dichtringe (36) zur Drehachse (14) gilt: A/D = 4/1 bis 2/1 und insbesondere A/D = 2,5/1 bis 3/1.

2. Drehdurchführung (10) nach Anspruch 1, **dadurch gekennzeichnet, dass** das Aktuatordrehlager (42) einen Innenring, einen Außenring und zwischen dem Innenring und dem Außenring vorgesehene Wälzkörper aufweist, wobei der Innenring mittels eines Sicherungsringes (52) fest am Aktuatorflansch (24) befestigt ist und wobei der Außenring mittels eines Befestigungsringes (46) fest am Grundteil (12) befestigt ist.

3. Drehdurchführung (10) nach Anspruch 1 oder 2, **dadurch gekennzeichnet, dass** das Antriebsdrehlager (40) einen Innenring, einen Außenring und zwischen dem Innenring und dem Außenring vorgesehene Wälzkörper aufweist, wobei der Innenring mittels eines Sicherungsringes (52) fest am Antriebsflansch (22) befestigt ist und wobei der Außenring mittels eines Befestigungsringes (44) fest am Grundteil (12) befestigt ist.

4. Drehdurchführung (10) nach einem der vorhergehenden Ansprüche, **dadurch gekennzeichnet, dass** am Antriebsflansch (22) und/oder am Aktuatorflansch (24) ein Schleifring (56) zur Durchführung von elektrischen Signalen vorgesehen ist, wobei der radiale Abstand S des Schleifrings (56) zur Drehachse (14) größer ist als der radiale Abstand D der Dichtringe (36) zur Drehachse (14) und kleiner ist als der radiale Abstand A der Drehlager (40, 42) zur Drehachse (14).

## Claims

1. Rotary union (10) for arrangement on a handling unit between an actuator and a rotary drive,
comprising a base part (12) and a rotary part (16) which can be rotated relative to the base part (12) about an axis of rotation (14),
the rotary part having an actuator flange, a drive flange and a shaft portion (18) arranged between the actuator flange and the drive flange,
comprising media connections (28) on the base part and media connections (30) on the rotary part,
comprising media lines (32, 38) provided between the media connections (28, 30), and
comprising rotary bearings (40, 42) provided between the base part (12) and the rotary part (16),
an actuator rotary bearing (42) being arranged on the actuator flange (24) in such a way that forces acting on the actuator flange (24) in the axial and radial directions are introduced into the base part (12) via the actuator rotary bearing (42),
a drive rotary bearing (40) being arranged on the drive flange (22) in such a way that the forces introduced into the base part (12) by the actuator flange (24) are conducted into the drive flange (22) via the drive rotary bearing (40),
the actuator rotary bearing (42) and the drive rotary bearing (40) having the same radial distance A to the axis of rotation (14),
sealing rings (36) that rest against the shaft portion (18) being provided for sealing adjacent media lines (32, 38),
**characterized in that**
the radial distance A of the rotary bearings (40, 42) to the axis of rotation (14) is greater than the radial distance D of the sealing rings (36) to the axis of rotation (14), and the following applying for the ratio of the radial distance A of the rotary bearings (40, 42) to the axis of rotation (14) to the radial distance D of the sealing rings (36) to the axis of rotation (14): A/D = 4/1 to 2/1 and in particular A/D = 2.5/1 to 3/1.

2. Rotary union (10) according to claim 1, **characterized in that** the actuator rotary bearing (42) has an inner ring, an outer ring and rolling elements provided between the inner ring and the outer ring, the inner ring being firmly fastened to the actuator flange (24) by means of a securing ring (52) and the outer ring being firmly fastened to the base part (12) by means of a fastening ring (46).

3. Rotary union (10) according to claim 1 or claim 2, **characterized in that** the drive rotary bearing (40) has an inner ring, an outer ring and rolling elements provided between the inner ring and the outer ring, the inner ring being firmly fastened to the drive flange (22) by means of a securing ring (52) and the outer ring firmly fastened to the base part (12) by means of a fastening ring (44).

4. Rotary union (10) according to any of the preceding claims, **characterized in that** a slip ring (56) for electrical signals to pass through is provided on the drive flange (22) and/or on the actuator flange (24), the radial distance S of the slip ring (56) to the axis of rotation (14) being greater than the radial distance D of the sealing rings (36) to the axis of rotation (14) and being smaller than the radial distance A of the rotary bearings (40, 42) to the axis of rotation (14).

## Revendications

1. Dispositif de traversée rotatif (10) destiné à être agencé sur une unité de manutention entre un actionneur et un entraînement rotatif,
avec une partie formant base (12) et une partie rotative (16) pouvant tourner autour d'un axe de rotation (14) par rapport à la partie formant base (12),
dans lequel la partie rotative présente une bride d'actionneur, une bride d'entraînement et une section d'arbre (18) agencée entre la bride d'actionneur et la bride d'entraînement,
avec des raccords pour fluide (28) situés côté partie formant base et des raccords pour fluide (30) situés côté partie rotative (30),
avec des conduites pour fluide (32, 38) fournies entre les raccord pour fluide (28, 30), et
avec des paliers rotatifs (40, 42) fournis entre la partie formant base (12) et la partie rotative (16),
dans lequel un palier rotatif d'actionneur (42) est agencé au niveau de la bride d'actionneur (24) de telle manière que des forces agissant sur la bride d'actionneur (24) dans les directions axiale et radiale sont introduites dans la partie formant base (12) par l'intermédiaire du palier rotatif d'actionneur (42),
dans lequel un palier rotatif d'entraînement (40) est agencé au niveau de la bride d'entraînement (22) de telle manière que les forces introduites par la bride d'actionneur (24) dans la partie formant base (12) sont transmises dans la bride d'entraînement (22) par l'intermédiaire du palier rotatif d'entraînement (40),
dans lequel le palier rotatif d'actionneur (42) et le palier rotatif d'entraînement (40) présentent la même distance radiale A par rapport à l'axe de rotation (14),
dans lequel des bagues d'étanchéité (36) reposant sur la section d'arbre (18) sont fournies afin de rendre étanche les conduites pour fluide (32, 38) adjacentes,
**caractérisé en ce que**
la distance radiale A des paliers rotatifs (40, 42) par rapport à l'axe de rotation (14) est supérieure à la distance radiale D des bagues d'étanchéité (36) par rapport à l'axe de rotation (14), et
dans lequel le rapport correspondant à la distance radiale A des paliers rotatifs (40, 42) par rapport à l'axe de rotation (14) sur la distance radiale D des bagues d'étanchéité (36) par rapport à l'axe de rotation (14) vaut :
A/D = 4/1 à 2/1 et en particulier A/D = 2,5/1 à 3/1.

2. Dispositif de traversée rotatif (10) selon la revendication 1, **caractérisé en ce que** le palier rotatif d'actionneur (42) présente une bague intérieure, une bague extérieure et des organes de roulement fournis entre la bague intérieure et la bague extérieure, dans lequel la bague intérieure est fixée de manière solidaire à la bride d'actionneur (24) au moyen d'une bague de maintien (52) et dans lequel la bague extérieure est fixée de manière solidaire à la partie formant base (12) au moyen d'une bague de fixation (46).

3. Dispositif de traversée rotatif (10) selon la revendication 1 ou 2, **caractérisé en ce que** le palier rotatif d'entraînement (40) présente une bague intérieure, une bague extérieure et des organes de roulement fournis entre la bague intérieure et la bague extérieure, dans lequel la bague intérieure est fixée de manière solidaire à la bride d'entraînement (22) au moyen d'une bague de maintien (52) et dans lequel la bague extérieure est fixée de manière solidaire à la partie formant base (12) au moyen d'une bague de fixation (44).

4. Dispositif de traversée rotatif (10) selon l'une quelconque des revendications précédentes, **caractérisé en ce qu'**une bague collectrice (56) permettant de faire traverser des signaux électriques est fournie au niveau de la bride d'entraînement (22) et/ou au niveau de la bride d'actionneur (24), dans lequel la distance radiale S de la bague collectrice (56) par rapport à l'axe de rotation (14) est supérieure à la distance radiale D des bagues d'étanchéité (36) par rapport à l'axe de rotation (14) et est inférieure à la distance radiale A des paliers rotatifs (40, 42) par rapport à l'axe de rotation (14).
